# EUROPÄISCHE PATENTANMELDUNG

(11) **EP 0 983 715 A2**
(43) Veröffentlichungstag der Anmeldung: **08.03.2000**
(21) Anmeldenummer: 99115795.9
(22) Anmeldetag: 11.08.1999
(51) Int. Cl.: A01B 49/02

(54) **Strohstriegel**

(30) Priorität: 02.09.1998 DE 19839880
(71) Anmelder: Amazonen-Werke H. Dreyer GmbH & Co. KG, 49205 Hasbergen (DE)
(72) Erfinder: Gattermann, Bernd, Dipl.-Ing, 27798 Hude (DE); Tiessen, Reimer Uwe, 26135 Oldenburg (DE)

(57) **Zusammenfassung**

Strohstriegel mit einem Rahmen (1), an dem in mehreren Querreihen hintereinander und beabstandet zueinander federnd ausgebildete Striegelzinken (6) angeordnet sind, wobei an dem Rahmen (1) hinter den Striegelzinken (6) zumindest eine Walze (13) oder mehrere nebeneinander angeordnete Walzenelemente angeordnet sind.

## Beschreibung

Der Erfindung betrifft einen Strohstriegel gemäß des Oberbegriffes des Patentanspruches 1.

Ein derartiger Strohstriegel ist beispielsweise durch den Prospekt Köckerling 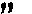 Strohstriegel von Köckerling" bekannt. Dieser Strohstriegel weist einen Rahmen auf, an dem in mehreren Querreihen hintereinander und beabstandet zueinander federnd ausgebildete Striegelzinken angeordnet sind. Dem Rahmen sind Stützräder zur Höhenführung des Striegels zugeordnet. Nachteilig ist bei diesen bekannten Strohstriegel, daß sich sich noch in den Ähren befindliche Körner, die nicht vollkommen aus den Ähren ausgedroschen sind, sich nicht ausreichend von den Striegelzinken aus den Ähren und vom Stroh lösen lassen.

Der Erfindung liegt die Aufgabe zugrunde, eine bessere Wirkungsweise des Strohstriegels auf einfache Weise zu erreichen.

Diese Aufgabe wird erfindungsgemäß dadurch gelöst, daß an dem Rahmen hinter den Striegelzinken zumindest eine Walze oder mehrere nebeneinander angeordnete Walzenelemente angeordnet sind. Durch diese hinter den Striegelzinken angeordnete Walze wird erreicht, daß die sich noch in den Ähren befindlichen Körner, welche von den Mähdreschern nicht vollkommen ausgedroschen worden ist, jetzt durch die nachlaufende Walze 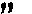 ausgedroschen" werden und somit vom Stroh gelöst werden. Desweiteren wird durch die nachlaufende Walzer erreicht, daß das von den Striegelzinken gleichmäßig verteilte Stroh, welches relativ locker auf der Bodenoberfläche liegt, durch die nachgeordnete Walze oder Walzenelemente angedrückt wird. Hierdurch wird der Anrottungs- und Verrottungsprozeß des Strohs wesentlich verbessert und beschleunigt.

Damit die Walze ausreichend gegen den Boden gedrückt wird, wenn die Walze nicht die Höhenführung des Rahmens des Strohstriegels übernimmt, ist vorgesehen, daß zwischen der Walze bzw. den Walzenelementen und dem Rahmen federnde Elemente zum Drücken der Walze oder der Walzenelemente gegen den Boden angeordnet sind.

Es ist auch möglich, daß anstelle der den Strohstriegel in der Höhe führenden Stützräder zwischen dem Rahmen und der Walze bzw. den Walzenelementen ein oder mehrere Höheneinstellungseinrichtungen angeordnet sind. Durch diese Maßnahme übernimmt dann die Walze gleichzeitig die Höhenführung des Rahmens, an dem die Striegelzinken des Strohstriegels angeordnet sind.

Um Striegelzinken zu schaffen, die in seitlicher Richtung stabil ausgebildet sind, damit sie nicht seitlich ausweichen können, so daß sich der Strichabstand zwischen den einzelnen Striegelzinken nicht während des Betriebes ändert, ist vorgesehen, daß die Striegelzinken jeweils mittels eines Scharniergelenkes, dessen Gelenkachse quer zur Fahrtrichtung verläuft, am Rahmen angeordnet sind, und daß ein Federelement für jeden Striegelzinken vorgesehen ist, mittels welchem der jeweilige Striegelzinken gegen den Boden drückbar ist.

Dadurch, daß jeder Striegelzinkel mittels eines Scharniergelenkes und einer Feder individuell am Rahmen aufgehängt ist, kann jeder Striegelzinken in sehr vorteilhafterweise Bodenunebenheiten folgen bzw. die Striegelzinken des Strohstriegels sich individuell den Unebenheiten des Bodens anpassen, so daß eine äußerst gleichmaßige Strohverteilung mit gleichmaßiger Strohdickenbedeckung des Bodens erreicht wird.

Um entsprechend den jeweiligen Einsatzverhältnissen eine optimale Arbeit des Strohstriegels zu gewährleisten, ist vorgesehen, daß eine zentrale Einstelleinrichtung vorgesehen ist, mittels welchem die Spannung der Federelemente zentral einstellbar ist. Somit ist eine einfache Verstellung des Federdruckes möglich.

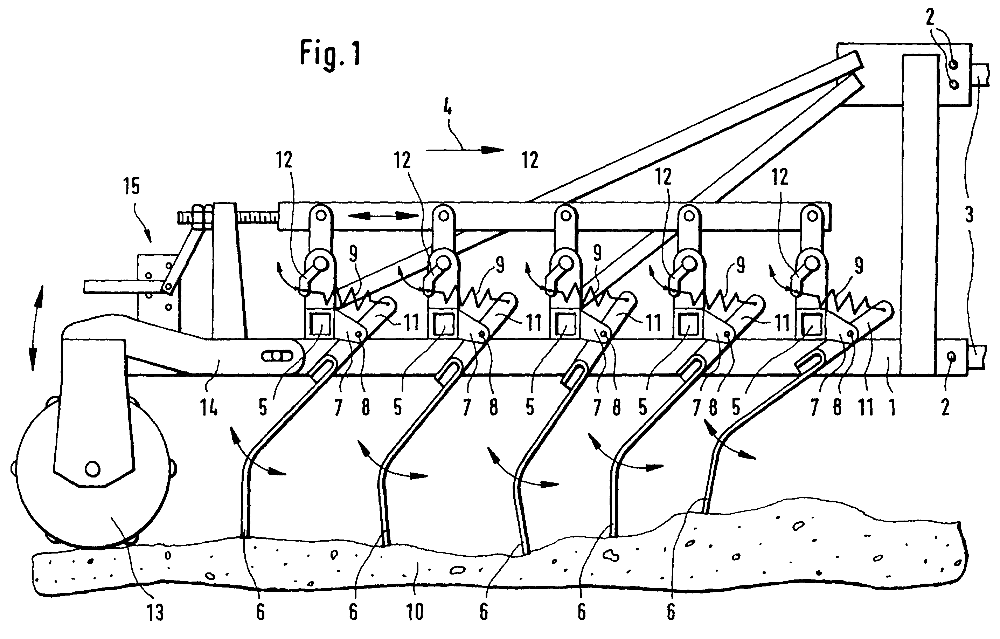

Weitere Einzelheiten der Erfindung sind den übrigen Unteransprüchen, der Beispielsbeschreibung und der Zeichnung zu entnehmen. Hierbei zeigt die Zeichnung
den Strohstriegel in der Seitenansicht und in Prinzipdarstellung.

Der Strohstriegei weist den Rahmen 1 auf, der über Dreipunktkupplungselemente 2 an den Dreipunktkraftheber 3 eines Schleppers anzukuppeln ist. An dem Rahmen 1 sind mehrere quer zur Fahrtrichtung 4 verlaufende Querträger 5 beabstandet zueinander angeordnet. An diesen Querträgern 5 sind jeweils quer zur Fahrtrichtung 4 beabstand zueinander die Striegelzinken 6 angeordnet. Die Striegelzinken 6 sind jeweils mittels eines Scharniergelenkes 7, dessen Gelenkachse 8 quer zur Fahrtrichtung 4 verläuft an den Querträgern 5 des Rahmens 1 beabstandet zueinander angeordnet. Für jeden Striegelzinken 6 ist ein Federelement 9 vorgesehen. Mittels dieses Federelementes 9 wird der jeweilige Striegelzinken 6 gegen den Boden 10 gedrückt. Die Federelemente 9 sind auf ihrer dem Striegelzinken 6 bzw. dem Hebel 11 des Scharniergelenkes 7, an dem die Striegelzinken 6 befestigt sind, an einer zentralen Einstellvorrichtung 12 angeordnet, mittels welchen die Spannung der Federelemente 9 zentral einstellbar ist.

Wie die Zeichnung zeigt, kann sich jeder Striegelzinken 6 individuell den Bodenunebenheiten des Bodens 10 aufgrund der federnden Einzelaufhängung gemäß der Erfindung anpassen und diesen Bodenunebenheiten folgen.

Hinter der letzten Reihe der Striegelzinken 6 ist die Walze 13 angeordnet. Bei großen Arbeitsbreiten sind mehrere Walzenelemente nebeneinander angeordnet, so daß die Walze 13 bzw. die Walzenelemente sich über die gesamte Arbeitsbreite des Strohstriegels erstrecken. Die Walze 13 oder die Walzenelemente sind im Ausführungsbeispiel als sogenannte Stabwalzen ausgebildet.

Zwischen dem Rahmen 1 und der Halterung 14 der Walze 13 bzw. Walzenelemente können nicht dargestellte federnde Elemente angeordnet sein, die die Walze 13 gegen den Boden 10 drücken. Es ist auch möglich, daß zwischen dem Rahmen 1 und der Halterung 14 der Walze 13, die dargestellte Höheneinstellungseinrichtung 15 anzuordnen, so daß die Walze 13 gleichzeitig die Höhenführung der Striegelzinken 6 des Strohstriegels übernimmt. Auch ist es möglich, wenn die Höheneinstellvorrichtung 15 zwischen Walzenhalterung 14 und Rahmen 1 nicht vorgesehen ist, an dem Rahmen des Strohstriegels in Höhenrichtung einstellbare Stützräder anzuordnen.

Die Funktionsweise des Strohstriegels ist folgende:

Mittels der Striegelzinken 6 wird sich das auf der Bodenoberfläche 10 befindliche Stroh durchgerüttelt und gleichmäßig verteilt. Gleichzeitig werden die sich in dem Stroh befindlichen Samenkörner herausgeschüttelt, so daß sie auf den Boden 10 fallen. Somit können diese Samenkörner zum Keimen gebracht werden. Durch die nachlaufende Walze 13 werden eventuell sich noch in den Ähren des Strohs befindliche Körner 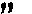 ausgedroschen". Gleichzeitig drückt die Walze 13 das Stroh an, so daß das Stroh in einer festen Schicht auf dem Boden 10 liegt, welches den Verrottungsprozeß des Strohs beschleunigt. Ebenfalls ist es für nachfolgende Bearbeitungsvorgänge, beispielsweise der Einsaat von Getreide in Direktsaatverfahren vorteilhaft, wenn das Stroh gleichmäßig verteilt und fest angedrückt auf dem Boden liegt.

## Patentansprüche

1. Strohstriegel mit einem Rahmen, an dem in mehreren Querreihen hintereinander und beabstandet zueinander federnd ausgebildete Striegelzinken angeordnet sind, dadurch gekennzeichnet, daß an dem Rahmen (1) hinter den Striegelzinken (6) zumindest eine Walze (13) oder mehrere nebeneinander angeordnete Walzenelemente angeordnet sind.

2. Strohstriegel nach Anspruch 1, dadurch gekennzeichnet, daß die Walze (13) oder Walzenelemente als sogenannte Stabwalzen ausgebildet sind.

3. Strohstriegel nach Anspruch 1, dadurch gekennzeichnet, daß zwischen der Walze (13) bzw. den Walzenelementen und dem Rahmen (1) federnde Elemente zum Drücken der Walze (13) oder Walzenelemente gegen den Boden (10) angeordnet sind.

4. Strohstriegel nach Anspruch 1, dadurch gekennzeichnet, daß zwischen dem Rahmen (1) und der Walze (13) bzw. Walzenelemente ein oder mehrere Höheneinstellungseinrichtungen (15) angeordnet sind.

5. Strohstriegel, insbesondere nach Anspruch 1, dadurch gekennzeichnet, daß die Striegelzinken (6) jeweils mittels eines Scharniergelenkes (7), dessen Gelenkachse (8) quer zur Fahrtrichtung (4) verläuft, am Rahmen (1) angeordnet sind, und daß ein Federelement (9) für jeden Striegelzinken (6) vorgesehen ist, mittels welchem der jeweilige Striegelzinken (6) gegen den Boden (10) drückbar ist.

6. Strohstriegel nach Anspruch 5, dadurch gekennzeichnet, daß eine zentrale Einstelleinrichtung vorgesehen ist, mittels welchem die Spannung der Federelemente (9) zentral einstellbar ist.

7. Strohstriegel nach einem oder mehreren der vorstehenden Ansprüche, dadurch gekennzeichnet, daß gegenüber dem Rahmen (1) in Höhenrichtung verstellbare Laufräder vorgesehen sind, auf welchem sich der Striegel abstützt.
